# FASCICULE DE BREVET EUROPEEN

(11) **EP 3 419 841 B1**
(45) Date de publication et mention de la délivrance du brevet: **08.06.2022**
(21) Numéro de dépôt: 17707618.9
(22) Date de dépôt: 02.02.2017
(51) Int. Cl.: B60H 1/00, B60H 1/34

(54) **SYSTEME ET PROCEDE DE DIFFUSION D'AIR POUR HABITACLE DE VEHICULE**
LUFTDIFFUSIONSSYSTEM UND VERFAHREN FÜR DEN PASSAGIERRAUM VON FAHRZEUGEN
AIR DIFFUSION SYSTEM AND METHOD FOR VEHICLE PASSENGER COMPARTMENT

(30) Priorité: 22.02.2016 FR 1600297
(43) Date de publication de la demande: 02.01.2019
(73) Titulaire: Valeo Systemes Thermiques, 78321 Le Mesnil-Saint-Denis (FR)
(72) Inventeur: NACER-BEY, Moussa, 78322 Le Mesnil-Saint-Denis Cedex (FR)
(74) Mandataire: Valeo Systèmes Thermiques
(86) Numéro de dépôt international: PCT/FR2017/050236
(87) Numéro de publication internationale: WO 2017/144792

(56) Documents cités:
- EP-A2- 1 236 593
- EP-A2- 2 517 907
- JP-A- 2005 112 231
- US-A1- 2007 114 292

## Description

L'invention concerne un système et un procédé de diffusion d'air pour habitacle de véhicule. Elle concerne également un système de climatisation équipé d'un tel système de diffusion et un habitacle de véhicule équipé d'un tel système de climatisation. Elle est particulièrement destinée au domaine des véhicules automobiles.

Il est connu des systèmes de diffusion d'air dans un habitacle de véhicule à moteur et plus particulièrement des systèmes de diffusion d'air destinés à rafraichir les passagers d'un véhicule automobile doté d'un système de climatisation.

En dépit de la présence d'un système de climatisation, la réalisation d'une ambiance thermique agréable à l'intérieur d'un véhicule automobile par temps ensoleillé, ou plus généralement par temps chaud, est beaucoup plus difficile que dans un grand espace fixe pour plusieurs raisons :
- Le volume d'air dans un habitacle est relativement petit et les vitres créent un effet de serre ; cet effet de serre peut être combattu en ouvrant les fenêtres et en créant des courants d'air, ce qui est cependant antinomique avec le fonctionnement d'une climatisation,
- Les parties internes à l'habitacle soumises au rayonnement lumineux ont tendance à chauffer et donc à contribuer à l'élévation de température dans l'habitacle ; ces parties se refroidissent beaucoup plus lentement,
- En fonction de l'orientation du véhicule par rapport au soleil, les passagers peuvent être soumis à des conditions très différentes,
- Du fait de la relative petite taille de l'habitacle, les aérateurs d'aération sont situées relativement près des passagers et le réglage du jet d'air frais est délicat, à la fois en température, en direction et en intensité.

De EP 1 236 593 on connaît un système de climatisation pour véhicule comprenant au moins un capteur de température pour mesurer la température d'une surface et un aérateur pour diriger un écoulement d'air vers cette surface. En fonction de la température mesurée, l'écoulement est orienté, formé selon un jet ou selon un écoulement diffus. La surface dont la température est mesurée peut être celle d'un passager et le système vise à maintenir cette température à l'intérieur d'une certaine fourchette de valeurs.

Ce système souffre de plusieurs inconvénients : la « température de surface » d'un passager est difficile à déterminer et en tout état de cause elle n'est pas toujours représentative du confort du passager.

L'invention propose une autre approche. Elle part de la constatation que la sensation de confort par temps de chaleur provient en grande part de l'application d'un écoulement d'air frais sur le visage. Or la tête d'un passager ne se trouve pas à un endroit fixe dans l'habitacle, ne serait-ce qu'à cause de la différence de taille entre les personnes. Habituellement le passager règle lui-même la ou les aérateurs de façon à orienter l'écoulement d'air vers son visage. Néanmoins ceci est peu pratique car une fois le ou les réglages obtenus, le passager ne doit plus bouger s'il veut conserver l'écoulement d'air frais sur son visage.

Le document JP 2005 112231 divulgue un type connu de système de diffusion d'air pour habitacle de véhicule comprenant au moins un aérateur, et des moyens d'orientation dudit au moins un aérateur, propres à diriger un écoulement d'air délivré par ledit aérateur, le système de diffusion d'air comportant en outre un dispositif de détection d'un visage d'au moins une personne présente dans l'habitacle relié auxdits moyens d'orientation de façon à diriger ledit écoulement d'air vers au moins le ou les visages détectés, le dispositif de détection comportant des moyens de commande desdits moyens d'orientation propres à diriger au moins un écoulement d'air vers un visage.

L'invention propose un système de diffusion d'air pour habitacle de véhicule comprenant au moins un aérateur et des moyens d'orientation dudit au moins un aérateur propre à diriger un écoulement d'air délivré par ledit aérateur, le système comportant en outre un dispositif de détection d'un visage d'au moins une personne présente dans l'habitacle relié auxdits moyens d'orientation de façon à diriger ledit écoulement d'air vers au moins le ou les visages détectés.

Selon l'invention, des moyens de commande et les moyens d'orientation sont en outre prévus pour ajuster la divergence du jet d'air diffusé par un aérateur.

Le système selon l'invention s'insère notamment mais pas nécessairement dans le système de climatisation d'un véhicule automobile, tel qu'une voiture, un camion, un bus... Il comporte classiquement des aérateurs de diffusion d'air de climatisation ou d'air extérieur, ces aérateurs comportant des volets orientables de façon à faire varier l'orientation de l'écoulement d'air qu'ils délivrent. De façon concomitante ou alternative, ils peuvent être montés eux-mêmes sur rotule et pivotants autour d'un ou deux axes. Dans tout le texte, on appellera « moyens d'orientation » des moyens permettant d'orienter les volets d'un aérateur et/ou l'aérateur dans son ensemble.

Les aérateurs de diffusion d'air sont avantageusement munis d'actuateurs de façon à les rendre pilotables par des moyens électriques et/ou électroniques, de sorte que l'on peut faire varier l'orientation de l'écoulement d'air qu'ils délivrent sans intervention humaine.

Le système se caractérise par sa capacité à :
- détecter le visage d'au moins une personne présente dans l'habitacle, appelée plus loin passager, que cette personne conduise ou non,
- orienter au moins un aérateur de façon à diriger un écoulement d'air vers ce visage.

Ce système s'adapte donc en temps réel à la position de la tête du ou des passagers pour diriger l'écoulement d'air vers leur tête.

On considère que la température de l'air diffusé et sa vitesse sont déterminées par l'utilisateur par des moyens classiques.

Avantageusement, le dispositif de détection peut comporter au moins un capteur optique, en particulier un capteur apte à former une image d'un visage.

Un tel capteur optique est par exemple une caméra, une web-cam ou autre, capable à l'aide d'une optique et d'un capteur placé derrière cette optique, de générer un signal électrique représentatif d'une image. Avantageusement, ledit capteur est muni d'optiques à grand angle de vue, de sorte qu'un seul capteur optique peut former une image d'un volume relativement important.

Avantageusement, le dispositif de détection peut comporter des moyens de traitement des signaux délivrés par le ou les capteurs optiques, lesdits moyens de traitement étant aptes à détecter un ou plusieurs visages.

Ce dispositif de traitement de signaux comporte par exemple un premier microprocesseur associé à une première mémoire sur laquelle est enregistré un logiciel apte à détecter les visages présents dans une image. Le logiciel, à partir des traits habituels d'un visage, est apte, par reconnaissance de forme, à identifier un visage dans une image.

Ce traitement d'image est suivi des calculs géométriques suivants :
- Calcul de l'orientation de ce visage par rapport au capteur optique à partir de sa position dans le plan de l'image,
- Calcul de la position du visage dans l'habitacle ; un tel calcul nécessite une estimation de la distance entre le capteur optique et le passager,
- Calcul de l'orientation à donner à chaque aérateur pour que l'écoulement d'air qu'il délivre soit dirigé vers le visage.

Ces calculs sont avantageusement réalisés par le dispositif de traitement de signaux.

Avantageusement, un seul et même capteur optique est employé pour plusieurs, voire l'ensemble, des passagers de l'habitacle.

Avantageusement, lesdits moyens d'orientation sont configurés pour diriger l'écoulement d'air vers le même visage depuis tout ou partie desdits aérateurs. Autrement dit, plusieurs aérateurs peuvent diriger simultanément leur écoulement d'air vers la tête d'un passager. Ces passagers sont notamment ceux de la première rangée de sièges, appelés sièges avant, incluant le conducteur, mais pas uniquement.

Suivant l'invention, le dispositif de détection comporte des moyens de commande desdits moyens d'orientation propres à diriger, notamment centrer, au moins un écoulement d'air vers un visage. Lesdits moyens de commande exploitent uniquement les signaux délivrés par le ou les capteurs optiques afin d'orienter l'écoulement d'air vers un visage, les moyens de commande étant connectés aux moyens de traitement des signaux délivrés par le ou les capteurs optiques, ou en d'autres termes, seuls les signaux délivrés par le ou les capteurs optiques sont pris en compte pour orienter l'écoulement d'air vers un visage. Le dispositif de diffusion d'air selon l'invention est ainsi capable de gérer la diffusion d'air au sein du véhicule avec un nombre minimal d'élément, facilitant ainsi son implémentation dans le véhicule.

Ces moyens de commande comportent par exemple un deuxième microprocesseur associé à une deuxième mémoire sur laquelle est enregistré un logiciel apte à commander les moyens d'orientation de la ou des aérateurs les plus proches du visage détecté. Bien entendu, le premier et le deuxième microprocesseurs peuvent être confondus, de même que la première et la deuxième mémoires.

Avantageusement, les moyens de commande peuvent comporter une temporisation par exemple réglée selon un niveau de rapidité du déplacement du visage. Une temporisation pouvant être par exemple, une production d'un signal de sortie séparé d'un signal d'entrée par un intervalle de temps déterminé.

Ceci permet d'éviter que les aérateurs suivent un passager dans tous ses mouvements rapides.

Outre l'orientation de l'écoulement d'air délivré par un aérateur, l'invention comporte des moyens pour déterminer sa divergence, c'est-à-dire l'angle solide dans lequel il est délivré, l'orientation de l'écoulement d'air étant considérée comme étant celle de l'axe médian de l'angle solide.

Avantageusement, la divergence du jet d'un aérateur peut être déterminée en fonction de la distance entre le visage et ledit aérateur.

La divergence donnée à l'écoulement d'air sera d'autant plus faible que la distance entre l'aérateur et la tête du passager sera plus grande : plus le passager est éloigné de l'aérateur, plus le jet délivré est concentré.

Avantageusement, la divergence du jet d'un aérateur peut être déterminée en fonction de la taille de l'image de visage détectée.

Dans ce cas, les moyens de commande utilisent une mesure de la taille du visage détecté par le capteur optique ; le jet d'air sera d'autant plus étroit que cette taille sera faible ; inversement, si le passager se penche en avant, la taille de son visage va s'accroitre et le jet d'air sera plus divergent.

Ces modes de réalisation ne sont pas exclusifs d'un réglage manuel par l'utilisateur de la divergence des jets d'air, cette dernière étant ensuite ajustée automatiquement par les moyens de commande en fonction de la position de sa tête à tout instant dans l'habitable.

Avantageusement, le système de diffusion d'air peut comporter un moyen d'activation et/ou désactivation du dispositif de détection de visage.

L'utilisateur peut choisir de mettre hors service le dispositif de détection automatique de visage.

L'invention porte également sur un système de climatisation pour habitacle de véhicule, comportant un système de diffusion d'air comme décrit cidessus.

L'invention porte également sur un habitacle de véhicule comportant un tel système de climatisation.

Avantageusement, l'habitacle comporte au moins une rangée de sièges disposés transversalement dans ledit habitacle et le système de détection comporte un seul capteur optique par rangée.

Lorsque le capteur optique est disposé par exemple au niveau de la planche de bord, il peut détecter les visages des passagers de la première rangée de sièges, notamment le conducteur, et les moyens d'orientation pilotent les aérateurs associées à cette première rangée, c'est-à-dire ceux qui peuvent atteindre les passagers de cette rangée.

En revanche, les visages des passagers assis sur la ou les rangées situées derrière celle du conducteur risquent de ne pas être facilement visibles par ce capteur. A ces rangées sont associées d'autres aérateurs de diffusion d'air, par exemple dans les montants entre porte avant et porte arrière, dans les accoudoirs... Dès lors le véhicule comporte avantageusement autant de capteurs optiques que de rangées de sièges. En revanche, les moyens de traitement de signaux, les moyens de calcul et les moyens de commande sont avantageusement mutualisés. Un capteur optique étant associé à une rangée de sièges, cela détermine une distance moyenne entre le capteur et les passagers utilisée dans le calcul de la position du visage.

L'invention porte également sur un procédé de diffusion d'air pour habitacle de véhicule comprenant au moins un aérateur, des moyens d'orientation dudit au moins un aérateur de façon à diriger un écoulement d'air délivré par cet aérateur et un dispositif de détection d'un visage d'au moins une personne, notamment au moins un capteur optique, le dispositif de détection comportant des moyens de commande desdits moyens d'orientation propres à diriger au moins un écoulement d'air vers un visage, les moyens de commande et les moyens d'orientation étant en outre prévus pour ajuster la divergence du jet d'air diffusé par un aérateur, caractérisé en ce qu'il comporte les étapes suivantes :
- détecter au moins un visage dans l'image délivrée à l'aide dudit dispositif de détection, notamment par l'au moins un capteur optique,
- activer les moyens d'orientation dudit au moins un aérateur de façon à diriger l'écoulement d'air vers ledit au moins un visage.

Avantageusement, le procédé comporte les étapes suivantes :
- prendre une vue de l'habitacle à l'aide de l'au moins un capteur optique,
- traiter les signaux délivrés par ledit capteur en vue de détecter au moins un visage,
- calculer la position dudit visage dans l'image,
- calculer la position dudit visage dans l'habitacle,
- affecter au moins un aérateur à chaque visage,
- calculer l'orientation à donner à chaque aérateur de façon à ce que le jet d'air qu'il délivre atteigne un visage,
- orienter au moins un aérateur pour diriger son jet d'air dudit aérateur vers ledit visage.

Avantageusement, le procédé peut comporter l'étape suivante :
- dans le cas où un seul visage est détecté, affecter tous les aérateurs à ce visage.

Le procédé peut aussi comporter une étape où le passager active ou désactive :
- la fonction d'orientation automatique
- l'orientation de tout les aérateurs.

Des modes de réalisation et des variantes seront décrits ci-après, à titre d'exemples non limitatifs, avec référence aux dessins annexés dans lesquels :
La figure 1 est un schéma de principe d'un système de diffusion d'air conforme à l'invention,
La figure 2 représente une image prise par un capteur optique dans le cas de deux passagers,
La figure 3 représente une vue en élévation d'un conducteur ou passager,
La figure 4 représente une vue en plan d'un conducteur et d'un passager,
La figure 5 représente une vue en plan d'un conducteur seul.

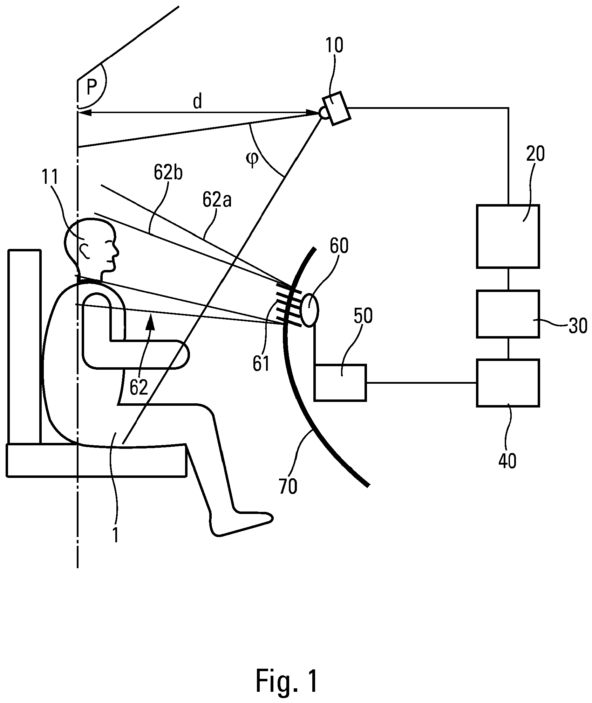

Comme illustré en figure 1, le système de diffusion d'air selon l'invention comporte un dispositif de détection, en particulier un capteur optique 10, par exemple une caméra, ici placé au-dessus du pare-brise dans un habitable de véhicule, qui observe une scène suivant un angle ϕ de prise de vue. Le capteur optique est relié à un dispositif de traitement de signaux 20 qui reçoit l'image prise par le capteur optique. Le dispositif de traitement de signaux 20 comporte un logiciel enregistré dans une mémoire et qui peut s'exécuter dans un microprocesseur de façon à extraire de cette image, de façon connue, un ou plusieurs visages d'une image à partir des traits caractéristiques d'un visage. En sortie de ce traitement, on obtient les coordonnées (xᵢ, yᵢ) du centre d'un visage Vᵢ dans le plan de l'image.

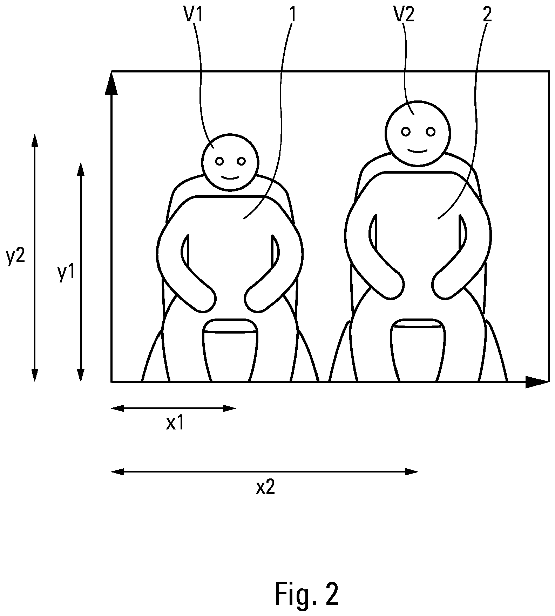

La figure 2 illustre une image prise par un même capteur optique, dans laquelle on distingue deux passagers 1, 2 et donc deux visages V₁, V₂. Le visage V₁ du premier passager 1 a pour coordonnées (x₁, y₁) dans cette image, celles du visage V₂ du second passager 2 étant (x₂, y₂). Ledit capteur forme ici une image de l'ensemble des passagers mais un tel angle vertical n'est pas nécessaire, la simple formation d'une image à partir de l'assise des sièges ou même d'une certaine hauteur à partir de l'assises des sièges de l'habitacle pouvant suffire.

Les coordonnées (xᵢ, yᵢ) sont transmises à un moyen de calcul 30 apte à les transformer en coordonnées (Xᵢ, Yᵢ) de ce visage Vᵢ dans le plan P dans lequel se trouve le passager 1 dont le visage a été détecté. Le moyen de calcul utilise pour cela la position du capteur optique 10 et la distance d entre ce capteur et le plan P, connues par construction et/ou déduites en corrélation avec la position des sièges. Le plan P est légèrement en avant de celui du dossier de la rangée de sièges sur lequel le passager est assis, par exemple de l'ordre de 20 cm.

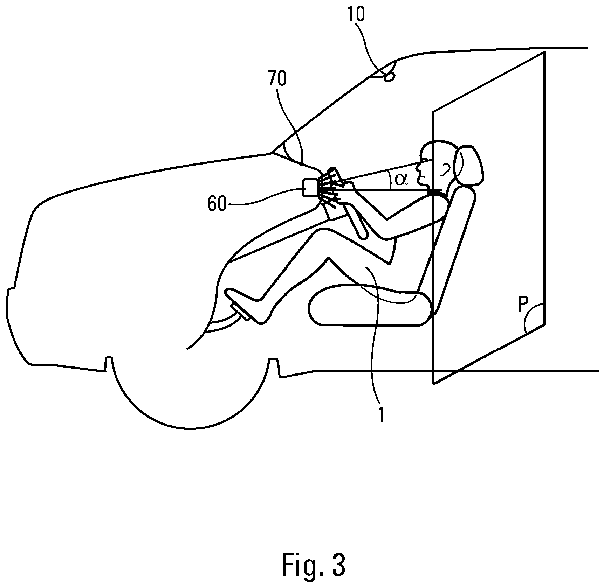

La position du plan P est en particulier illustrée, de façon schématique, à la figure 3.

Les coordonnées (Xᵢ, Yᵢ) sont transmises à un moyen de calcul 30 qui calcule les orientations (α_{i,j}, β_{i,j}) à donner aux différents aérateurs Aⱼ susceptibles d'atteindre la tête dont le visage Vᵢ a été détecté. Ces orientations sont définies par rapport à un plan horizontal et à un plan vertical :
- Soit α_{i,j} l'angle d'orientation à donner dans le plan vertical à l'aérateur Aⱼ pour que son jet d'air atteigne le visage Vᵢ,
- Soit β_{i,j} l'angle d'orientation à donner dans le plan horizontal, compté dans le sens horaire, à l'aérateur Aⱼ pour que son jet d'air atteigne le visage Vᵢ.

Pour cela, le moyen de calcul 30 commence par effectuer une affectation de chaque aérateur Aⱼ à un visage Vᵢ. Cette affectation se fait naturellement dans la mesure où les habitacles de véhicule ont très généralement une symétrie autour d'un plan médian vertical. Dès lors tous les aérateurs d'un côté de ce plan de symétrie sont affectés au passager qui se trouve du même côté de ce plan.

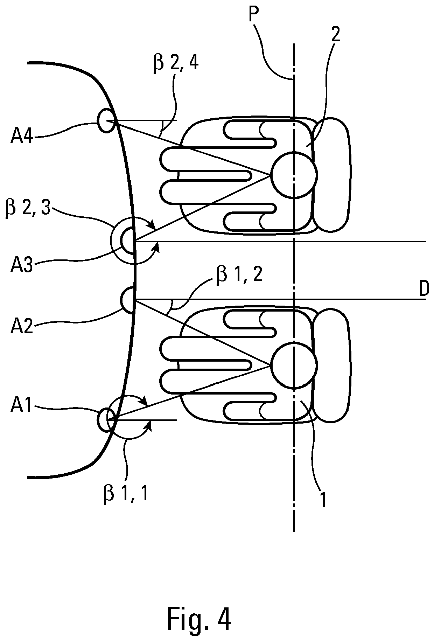

La figure 4 illustre cette situation : les aérateurs A₁ et A₂ situés à gauche dans le sens de la marche du plan médian de symétrie sont affectés au passager 1 à gauche de ce plan, les aérateurs A₃ et A₄ situés à droite sont affectés au passager 2 à droite de ce plan. Par rapport à une direction longitudinale D du véhicule, les jets d'air des aérateurs A₁ à A₄ sont donc orientés comme suit dans le plan horizontal :
- Aérateur A₁, angle β_{1,1} vers le premier passager 1,
- Aérateur A₂, angle β_{1,2} vers le premier passager 1,
- Aérateur A₃, angle β_{2,3} vers le second passager 2,
- Aérateur A₄, angle β_{2,4} vers le second passager 2.

Il en va bien entendu de même pour les angles α_{i,j} dans le plan vertical.

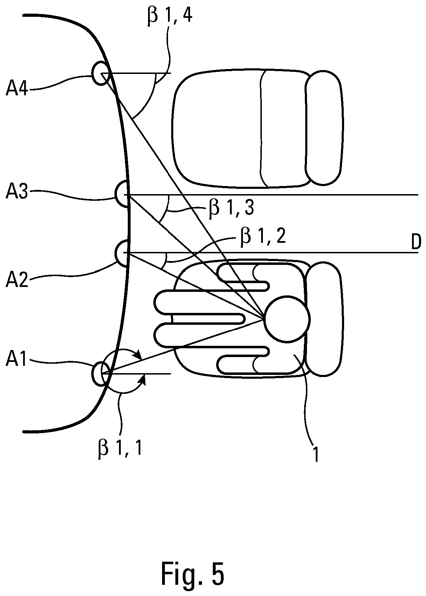

Comme illustré à la figure 5, une exception se produit lorsqu'un seul visage est détecté, par exemple lorsque le conducteur est seul ; un autre exemple est celui où, à l'arrêt, le passager non conducteur se trouve seul dans l'habitacle. Dans ce cas, avantageusement, le moyen de calcul affecte l'ensemble des aérateurs au seul visage détecté. Dans le cas du conducteur seul, ceci peut le conduire à baisser le niveau de climatisation et donc à faire des économies d'énergie. Ici, les aérateurs A₃ et A₄ situés à droite du plan médian de symétrie sont cette fois affectés au seul passager 1. Dans ce cas les angles d'orientation deviennent respectivement β_{1,1}, β_{1,2}, β_{1,3} et β_{1,4}.

Néanmoins le passager peut trouver peu agréable cette affectation de tous les aérateurs sur son visage ; le système comporte avantageusement un moyen d'activation et/ou désactivation de cette fonction d'affectation de tous les aérateurs sur un même passager. Dans ce cas, les aérateurs non affectés A₃, A₄ sont soit désactivés, soit leur jet est dirigé de façon axiale dans l'habitacle.

Dans le cas où le système n'arrive à détecter aucun visage (présence d'un large chapeau par exemple), il dispose le jet des aérateurs par exemple dans la direction longitudinale D du véhicule.

Si l'on se reporte de nouveau figure 1, on constate que le système de diffusion conforme à l'invention comporte en outre un ou des aérateurs 60, par exemple placés sur la planche de bord 70 du véhicule, et des moyens d'orientation du ou desdits aérateurs 60, par exemple un ou des actionneurs 50. Ledit système comprend encore ici des moyens de commande 40, contrôlant lesdits actionneurs 50.

Selon l'invention, ledit dispositif de détection est relié auxdits moyens d'orientation. Plus précisément, ici, les moyens de commande 40 sont configurés pour être pilotés par les moyens de calcul 30.

Les orientations (α_{i,j}, β_{i,j}) sont transmises auxdits moyens de commande 40 de façon à orienter des volets 61 de l'aérateur et/ou l'aérateur lui-même. L'aérateur délivre ainsi un jet d'air 62 dirigé vers la tête 11 du passager.

Avantageusement, l'aérateur 60 peut délivrer un jet d'air 62 plus ou moins divergeant : le jet d'air 62a est plus divergeant que le jet d'air 62b qui vise plus précisément la tête 11 du passager 1. Cette divergence peut être le résultat d'un calcul effectué par le moyen de calcul 30 et basé sur la distance entre l'aérateur et la tête du passager, ou bien sur la taille de la tête du passager, calculée par le dispositif de traitement de signaux 20.

## Revendications

1. Système de diffusion d'air pour habitacle de véhicule comprenant au moins un aérateur (60a - 60d, Aⱼ) et des moyens d'orientation (50) dudit au moins un aérateur, propres à diriger un écoulement d'air (62) délivré par ledit aérateur, le système de diffusion d'air comportant en outre un dispositif de détection d'un visage (Vᵢ) d'au moins une personne (1, 2) présente dans l'habitacle relié auxdits moyens d'orientation de façon à diriger ledit écoulement d'air vers au moins le ou les visages détectés, le dispositif de détection comportant des moyens de commande (40) desdits moyens d'orientation (50) propres à diriger au moins un écoulement d'air (62) vers un visage (Vᵢ), **caractérisé en ce que** les moyens de commande (40) et les moyens d'orientation (50) sont en outre prévus pour ajuster la divergence du jet d'air (62) diffusé par un aérateur (Aⱼ).

2. Système de diffusion d'air pour habitacle de véhicule selon la revendication 1, **caractérisé en ce que** le dispositif de détection comporte au moins un capteur optique (10), apte à former une image d'un visage.

3. Système de diffusion d'air selon la revendication 2, **caractérisé en ce que** le dispositif de détection comporte des moyens de traitement des signaux (20) délivrés par le ou les capteurs optiques (10), lesdits moyens de traitement étant aptes à détecter un ou plusieurs visages (Vᵢ).

4. Système de diffusion d'air selon l'une des revendications 1 à 3, **caractérisé en ce que** les moyens de commande (40) comportent une temporisation.

5. Système de diffusion d'air selon la revendication 1 à 4, **caractérisé en ce que** la divergence du jet d'un aérateur (Aⱼ) est déterminée en fonction de la distance entre le visage (Vᵢ) et ledit aérateur et/ou en fonction de la taille de l'image de visage détectée.

6. Système de diffusion d'air selon l'une quelconque des revendications précédentes dans lequel lesdits moyens d'orientation (50) sont configurés pour diriger l'écoulement d'air vers le même visage depuis tout ou partie desdits aérateurs.

7. Système de diffusion d'air selon l'une des revendications précédentes, **caractérisé en ce qu'**il comporte un moyen d'activation et/ou désactivation du dispositif de détection de visage.

8. Système de climatisation pour habitacle de véhicule, comportant un système de diffusion d'air selon l'une des revendications précédente.

9. Habitacle de véhicule comportant un système de climatisation selon la revendication 8.

10. Habitacle de véhicule selon la revendication 9, ledit habitacle comportant au moins une rangée de sièges disposés transversalement dans ledit habitacle, **caractérisé en ce que** le système de détection comporte un seul capteur optique (10) par rangée.

11. Procédé de diffusion d'air pour habitacle de véhicule comprenant au moins un aérateur (Aⱼ), des moyens d'orientation (50) dudit au moins un aérateur de façon à diriger un écoulement d'air (62) délivré par cet aérateur, un dispositif de détection d'un visage (Vᵢ) d'au moins une personne (1, 2), le dispositif de détection comportant des moyens de commande (40) desdits moyens d'orientation (50) propres à diriger au moins un écoulement d'air (62) vers un visage (Vᵢ), les moyens de commande (40) et les moyens d'orientation (50) étant en outre prévus pour ajuster la divergence du jet d'air (62) diffusé par un aérateur (Aⱼ), **caractérisé en ce qu'**il comporte les étapes suivantes :
- détecter au moins un visage (Vᵢ) à l'aide dudit dispositif de détection,
- activer les moyens d'orientation (50) dudit au moins un aérateur de façon à diriger l'écoulement d'air vers ledit au moins un visage.

12. Procédé de diffusion d'air selon la revendication 11, dans lequel ledit dispositif de détection comprend au moins un capteur optique (10), ledit procédé étant **caractérisé en ce qu'**il comporte les étapes suivantes :
- prendre une vue de l'habitacle à l'aide de l'au moins un capteur optique (10),
- traiter les signaux délivrés par ledit capteur en vue de détecter au moins un visage (Vᵢ),
- calculer la position dudit visage dans l'image,
- calculer la position dudit visage dans l'habitacle,
- affecter au moins un aérateur à chaque visage,
- calculer l'orientation à donner à chaque aérateur (Aⱼ) de façon à ce que le jet d'air (62) qu'il délivre atteigne un visage,
- orienter au moins un aérateur pour diriger son jet d'air dudit aérateur vers ledit visage.

13. Procédé de diffusion d'air selon l'une des revendications 11 ou 12, **caractérisé en ce qu'**il comporte l'étape suivante :
- dans le cas où un seul visage (Vᵢ) est détecté, affecter tous les aérateurs (Aⱼ) à ce visage.

## Patentansprüche

1. Luftausströmungssystem für Fahrzeuginnenraum umfassend wenigstens einen Lufttrichter (60a - 60d, Aⱼ) und Mittel zur Orientierung (50) des wenigstens einen Lufttrichters, die geeignet sind, eine Luftströmung (62) zu lenken, die von dem Lufttrichter abgegeben wird, wobei das Luftausströmungssystem ferner eine Vorrichtung zur Detektion eines Gesichts (Vᵢ) wenigstens einer Person (1, 2), die im Innenraum anwesend ist, aufweist, die mit den Orientierungsmitteln verbunden ist, um die Luftströmung wenigstens in Richtung des oder der detektierten Gesichter zu lenken, wobei die Detektionsvorrichtung Mittel zur Steuerung (40) der Orientierungsmittel (50) aufweist, die geeignet sind, wenigstens eine Luftströmung (62) in Richtung eines Gesichts (Vᵢ) zu lenken, **dadurch gekennzeichnet, dass** die Steuermittel (40) und die Orientierungsmittel (50) ferner dafür vorgesehen sind, die Aufweitung des Luftstrahls (62) anzupassen, der von einem Lufttrichter (Aⱼ) ausgeströmt wird.

2. Luftausströmungssystem für Fahrzeuginnenraum nach Anspruch 1, **dadurch gekennzeichnet, dass** die Detektionsvorrichtung wenigstens einen optischen Sensor (10) aufweist, der geeignet ist, ein Bild eines Gesichts zu erzeugen.

3. Luftausströmungssystem nach Anspruch 2, **dadurch gekennzeichnet, dass** die Detektionsvorrichtung Mittel zur Verarbeitung der Signale (20) aufweist, die von dem oder den optischen Sensoren (10) geliefert werden, wobei die Verarbeitungsmittel geeignet sind, ein oder mehrere Gesichter (Vᵢ) zu detektieren.

4. Luftausströmungssystem nach einem der Ansprüche 1 bis 3, **dadurch gekennzeichnet, dass** die Steuermittel (40) eine Verzögerung aufweisen.

5. Luftausströmungssystem nach Anspruch 1 bis 4, **dadurch gekennzeichnet, dass** die Aufweitung des Strahls eines Lufttrichters (Aⱼ) in Abhängigkeit von dem Abstand zwischen dem Gesicht (Vᵢ) und dem Lufttrichter und/oder in Abhängigkeit von der Größe des detektierten Gesichtsbilds bestimmt wird.

6. Luftausströmungssystem nach einem der vorhergehenden Ansprüche, wobei die Orientierungsmittel (50) dazu ausgebildet sind, die Luftströmung in Richtung desselbe Gesichts von allen oder einigen der Lufttrichter zu lenken.

7. Luftausströmungssystem nach einem der vorhergehenden Ansprüche, **dadurch gekennzeichnet, dass** es ein Mittel zur Aktivierung und/oder Deaktivierung der Gesichtsdetektionsvorrichtung aufweist.

8. Klimasteuerungssystem für Fahrzeuginnenraum, aufweisend ein Luftausströmungssystem nach einem der vorhergehenden Ansprüche.

9. Fahrzeuginnenraum, aufweisend ein Klimasteuerungssystem nach Anspruch 8.

10. Fahrzeuginnenraum nach Anspruch 9, wobei der Innenraum wenigstens eine Reihe Sitze aufweist, die quer in dem Innenraum angeordnet sind, **dadurch gekennzeichnet, dass** das Detektionssystem einen einzelnen optischen Sensor (10) pro Reihe aufweist.

11. Luftausströmungsverfahren für Fahrzeuginnenraum umfassend wenigstens einen Lufttrichter (Aⱼ), Mittel zur Orientierung (50) des wenigstens einen Lufttrichters, um eine Luftströmung (62) zu lenken, die von diesem Lufttrichter abgegeben wird, eine Vorrichtung zur Detektion eines Gesichts (Vᵢ) wenigstens einer Person (1, 2), wobei die Detektionsvorrichtung Mittel zur Steuerung (40) der Orientierungsmittel (50) aufweist, die geeignet sind, wenigstens eine Luftströmung (62) in Richtung eines Gesichts (Vᵢ) zu lenken, wobei die Steuermittel (40) und die Orientierungsmittel (50) ferner dafür vorgesehen sind, die Aufweitung des Luftstrahls (62) anzupassen, der von einem Lufttrichter (Aⱼ) ausgeströmt wird, **dadurch gekennzeichnet, dass** es die folgenden Schritte aufweist:
- Detektieren wenigstens eines Gesichts (Vᵢ) mithilfe der Detektionsvorrichtung,
- Aktivieren der Mittel zur Orientierung (50) des wenigstens einen Lufttrichters, um die Luftströmung in Richtung des wenigstens einen Gesichts zu lenken.

12. Luftausströmungsverfahren nach Anspruch 11, wobei die Detektionsvorrichtung wenigstens einen optischen Sensor (10) umfasst, wobei das Verfahren **dadurch gekennzeichnet ist, dass** es die folgenden Schritte aufweist:
- Aufnehmen eines Bildes des Innenraums mithilfe des wenigstens einen optischen Sensors (10),
- Verarbeiten der Signale, die vom Sensor geliefert werden, um wenigstens ein Gesicht (Vᵢ) zu detektieren,
- Berechnen der Position des Gesichts im Bild,
- Berechnen der Position des Gesichts im Innenraum,
- Zuweisen wenigstens eines Lufttrichters zu jedem Gesicht,
- Berechnen der jedem Lufttrichter (Aⱼ) zu gebenden Orientierung, damit der Luftstrahl (62), den er abgibt, ein Gesicht erreicht,
- Orientieren wenigstens eines Lufttrichters, um dessen Luftstrahl des Lufttrichters in Richtung des Gesichts zu lenken.

13. Luftausströmungsverfahren nach einem der Ansprüche 11 oder 12, **dadurch gekennzeichnet, dass** es den folgenden Schritt aufweist:
- in dem Fall, dass ein einzelnes Gesicht (Vᵢ) detektiert wird, Zuweisen aller Lufttrichter (Aⱼ) zu diesem Gesicht.

## Claims

1. Air diffusion system for a vehicle interior comprising at least one air vent (60a - 60d, Aⱼ) and orientation means (50) for orienting said at least one air vent, which are capable of directing an air flow (62) delivered by said air vent, the air diffusion system further comprising a detection device for detecting a face (Vᵢ) of at least one individual (1, 2) present in the vehicle interior, connected to said orientation means so as to direct said air flow toward at least the face or faces detected, the detection device comprising control means (40) for controlling said orientation means (50) capable of directing at least one air flow (62) toward a face (Vᵢ), **characterized in that** the control means (40) and the orientation means (50) are also designed to adjust the divergence of the air jet (62) diffused by an air vent (Aⱼ).

2. Air diffusion system for a vehicle interior according to Claim 1, **characterized in that** the detection device comprises at least one optical sensor (10), able to form an image of a face.

3. Air diffusion system according to Claim 2, **characterized in that** the detection device comprises signal processing means (20) for processing the signals delivered by the optical sensor or sensors (10), said processing means being able to detect one or more faces (Vᵢ).

4. Air diffusion system according to one of Claims 1 to 3, **characterized in that** the control means (40) comprise a time delay.

5. Air diffusion system according to Claim 1 to 4, **characterized in that** the divergence of the jet of an air vent (Aⱼ) is determined as a function of the distance between the face (Vᵢ) and said air vent and/or as a function of the size of the facial image detected.

6. Air diffusion system according to any one of the preceding claims, wherein said orientation means (50) are configured to direct the air flow toward the same face from all or some of said air vents.

7. Air diffusion system according to one of the preceding claims, **characterized in that** it comprises a means for activating and/or deactivating the face detection device.

8. Air conditioning system for a vehicle interior, comprising an air diffusion system according to one of the preceding claims.

9. Vehicle interior comprising an air conditioning system according to Claim 8.

10. Vehicle interior according to Claim 9, said interior comprising at least one row of seats arranged transversely in said interior, **characterized in that** the detection system comprises a single optical sensor (10) per row.

11. Air diffusion method for a vehicle interior comprising at least one air vent (Aⱼ), orientation means (50) for orienting said at least one air vent so as to direct an air flow (62) delivered by this air vent and a detection device for detecting a face (Vᵢ) of at least one individual (1, 2), the detection device comprising control means (40) for controlling said orientation means (50) capable of directing at least one air flow (62) toward a face (Vᵢ), the control means (40) and the orientation means (50) also being designed to adjust the divergence of the air jet (62) diffused by an air vent (Aⱼ), **characterized in that** it comprises the following steps:
- detecting at least one face (Vᵢ) using said detection device,
- activating the orientation means (50) that orient said at least one air vent so as to direct the air flow toward said at least one face.

12. Air diffusion method according to Claim 11, wherein said detection device comprises at least one optical sensor (10), said method being **characterized in that** it comprises the following steps:
- capturing an image of the interior using the at least one optical sensor (10),
- processing the signals delivered by said sensor so as to detect at least one face (Vᵢ),
- calculating the position of said face within the image,
- calculating the position of said face within the interior,
- assigning at least one air vent to each face,
- calculating the orientation to be given to each air vent (Aⱼ) so that the air jet (62) it delivers reaches a face,
- orienting at least one air vent so as to direct its air jet from said air vent toward said face.

13. Air diffusion method according to one of Claims 11 or 12, **characterized in that** it comprises the following step:
- if just one face (Vᵢ) is detected, assigning all the air vents (Aⱼ) to this face.
